# DEMANDE DE BREVET EUROPEEN

(11) **EP 4 671 580 A1**
(43) Date de publication de la demande: **31.12.2025**
(21) Numéro de dépôt: 25305846.5
(22) Date de dépôt: 10.06.2025
(51) Int. Cl.: F16K 11/083, F16K 27/06, F16K 5/02

(54) **VANNE CARTOUCHE ET ENSEMBLE DE VANNE A CARTOUCHE ASSOCIE**

(30) Priorité: 28.06.2024 FR 2407052
(71) Demandeur: Schrader, 25301 Pontarlier cedex (FR)
(72) Inventeur: CHANAL, Thomas, 25300 PONTARLIER (FR)
(74) Mandataire: Novagraaf Technologies

(57) **Abrégé**

Vanne (14) à cartouche prévue pour être montée dans un logement (16) adapté aménagé dans un bâti de réception (12), comprenant :
- un châssis (26),
- un boisseau (34) monté à rotation sur le châssis (26) et comportant :
-- un corps principal (36) muni de passages de fluide (38) débouchant dans une paroi axiale externe (40) du corps principal (36) par au moins deux orifices de sortie (42), et
-- un arbre d'entraînement (44) apte à être accouplé à un actionneur (46) pour commander la rotation du boisseau (34),
- un ensemble de parois axiales périphériques (56) qui est solidaire du châssis (26), l'ensemble de parois axiales périphériques (56) étant muni de plusieurs ouvertures radiale (58) prévues pour être alignées vers l'intérieur avec des orifices de sortie (42) du boisseau (34), dans des positions angulaires déterminées du boisseau (34), et vers l'extérieur avec des conduits (18) associés du bâti de réception (12).

## Description

### Domaine technique de l'invention

La présente demande concerne une vanne cartouche, c'est à dire une vanne destinée à être montée dans un logement appartenant à un bâti.

La présente demande concerne plus particulièrement une vanne cartouche multivoies configurée pour permettre la circulation d'un fluide selon plusieurs voies de passage fluidique.

### Arrière-plan technique

Les vannes multivoies sont couramment utilisées pour permettre de diriger un fluide au travers de différentes voies de passage fluidique suivant l'utilisation souhaitée.

De manière habituelle, les vannes du type cartouche multivoies sont composées d'un boisseau monté mobile en rotation par rapport à un châssis qui est fixé sur un bâti de réception. Le bâti de réception comporte des conduits qui débouchent en vis-à-vis du boisseau. Le boisseau comporte un corps principal muni de passages de fluide débouchant dans une paroi axiale externe du corps principal par des orifices de sortie.

Le boisseau peut être pourvu d'éléments d'étanchéité fluidique de manière à rendre étanche la voie de passage fluidique formée entre les conduits du bâti de réception et les orifices de sortie des passages de fluide.

Cependant, le positionnement des éléments d'étanchéité fluidique sur le boisseau présente des inconvénients notamment quant au bon positionnement de ces derniers et également quant à la solidité de ce positionnement dans le temps.

Par ailleurs, les opérations de fabrication et de manutention liées à la livraison de pièces finies sur le site chargé du montage des vannes dans les bâtis de réception ne sont pas optimisées ce qui augmente les coûts de fabrication et complique les opérations d'assemblage. De plus, l'étanchéité dynamique ne peut pas être assurée par le fournisseur.

Ainsi, il existe actuellement un besoin pour proposer une vanne cartouche améliorée.

### Résumé de l'invention

L'invention propose une vanne à cartouche prévue pour être montée dans un logement adapté aménagé dans un bâti de réception, comprenant :
- un châssis prévu pour être fixé directement sur le bâti de réception,
- un boisseau monté à rotation sur le châssis autour d'un axe principal de rotation, le boisseau comportant :
   -- un corps principal muni de passages de fluide débouchant dans une paroi axiale externe du corps principal par au moins deux orifices de sortie, et
   -- un arbre d'entraînement qui s'étend depuis le corps principal au travers d'une portion du châssis, de manière à pouvoir être accouplé à un actionneur apte à commander la rotation du boisseau,
- un ensemble de parois axiales périphériques qui est solidaire du châssis, avant montage de la vanne dans son logement, l'ensemble de parois axiales périphériques étant muni de plusieurs ouvertures radiale prévues pour être alignées vers l'intérieur avec des orifices de sortie du boisseau, dans des positions angulaires déterminées du boisseau, et vers l'extérieur avec des conduits associés du bâti de réception.

Selon d'autres caractéristiques de la vanne à cartouche :
- l'ensemble de parois axiales périphériques comporte au moins deux éléments de paroi axiale périphérique rapportés qui sont fixés sur le châssis de manière à pouvoir être portés par le châssis avant montage de la vanne dans son logement, chaque élément de paroi axiale périphérique étant muni d'une ouverture radiale, chaque élément de paroi axiale périphérique comportant une portion de fixation apte à permettre son accrochage sur une portion de réception complémentaire du châssis, avant montage de la vanne dans son logement ;
- la portion de fixation de chaque élément de paroi axiale périphérique comporte un organe d'emboîtement élastique apte à coopérer avec un élément complémentaire de la portion de réception associée du châssis ;
- la portion de réception du châssis comporte, pour chaque élément de paroi axiale périphérique, une rainure axiale apte à recevoir la portion de fixation et une encoche apte à recevoir par emboîtement élastique l'organe d'emboîtement élastique pour retenir la portion de fixation sur la portion de réception ;

- chaque ouverture radiale est pourvue d'un joint annulaire d'étanchéité qui est porté par l'ensemble de parois axiales périphériques, avant montage de la vanne dans son logement, de manière à s'interposer radialement entre le corps principal du boisseau et une surface d'appui en vis-à-vis du bâti de réception, lorsque la vanne est montée dans son logement ;
- le joint annulaire d'étanchéité et l'ensemble de parois axiales périphériques sont réalisés d'une seule pièce par moulage en deux matières distinctes ;
- le corps principal du boisseau a une forme tronconique de diamètre décroissant en direction de l'extrémité opposée au châssis, et l'ensemble de parois axiales périphériques est configuré pour que son encombrement externe soit également de forme tronconique, en épousant la forme tronconique du corps principal du boisseau ;
- l'ensemble de parois axiales périphériques comporte une portion tubulaire d'extrémité, du côté opposé au châssis, qui est configurée pour guider axialement la vanne lors du montage dans son logement ;

On propose également un ensemble de vanne à cartouche comportant :
- une vanne selon l'une quelconque des caractéristiques précédentes,
- un bâti de réception muni d'un logement adapté à la vanne, le bâti comportant au moins deux conduits qui débouchent dans le logement par des orifices radiaux prévus pour être alignés radialement avec des orifices de sortie du boisseau dans au moins une position angulaire déterminée du boisseau.

Selon d'autres caractéristiques de l'ensemble de vanne à cartouche :
- la paroi principale interne du logement possède une forme tronconique globalement complémentaire de la forme tronconique du corps principal du boisseau équipé de l'ensemble de parois axiales périphériques ;
- le logement comporte un épaulement apte à recevoir en butée axiale un tronçon tubulaire du châssis, et le tronçon tubulaire du châssis est pourvu d'une gorge annulaire périphérique externe et d'un joint torique monté dans ladite gorge annulaire périphérique externe.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] est une vue générale en perspective d'un ensemble de vanne à cartouche selon un premier mode de réalisation ;
[Fig.2] est une vue en coupe axiale selon le plan II-II qui représente l'ensemble de vanne à cartouche de la figure 1 ;
[Fig.3] est une vue éclatée en perspective qui représente la vanne à cartouche appartenant à l'ensemble de vanne à cartouche de la figure 1 ;
[Fig.4] est une vue en perspective similaire à celle de la figure 1, sans le bâti de réception, qui représente un second mode de réalisation d'un ensemble de vanne à cartouche ;
[Fig.5] est une vue en coupe axiale selon le plan V-V qui représente l'ensemble de vanne à cartouche de la figure 4 ;
[Fig.6] est une vue en perspective qui représente un troisième mode de réalisation comportant un collecteur de distribution de fluide équipé de deux ensembles de vanne selon le premier mode de réalisation ;
[Fig.7] est une vue en coupe axiale selon le plan VII-VII qui représente le collecteur de distribution de fluide de la figure 6.

### Description détaillée de l'invention

Dans la description qui va suivre, des éléments identiques, similaires ou analogues seront désignés par les mêmes chiffres de référence.

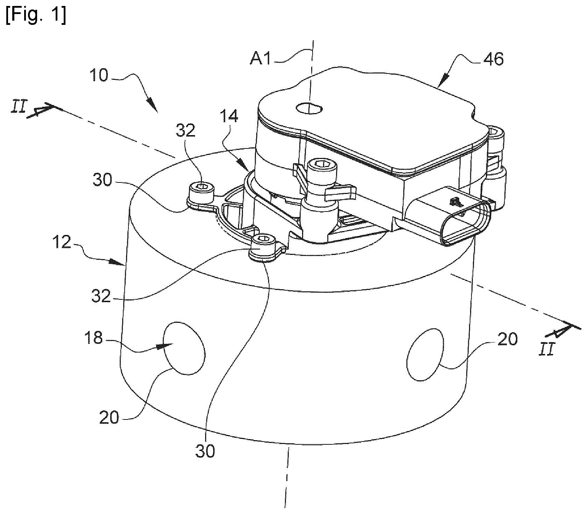

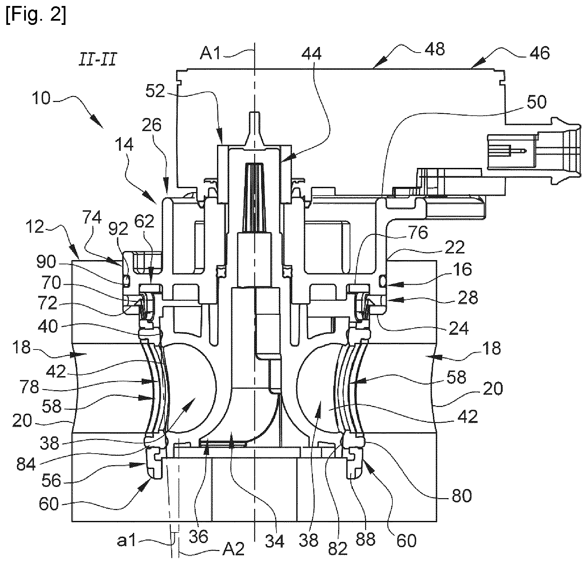

Les figures 1 et 2 illustrent un ensemble de vanne à cartouche 10 comportant un bâti de réception 12 et une vanne 14 du type vanne cartouche multivoies selon un premier mode de réalisation.

La vanne 14 est prévue pour être montée axialement, selon un axe principal A1, dans un logement 16 globalement cylindrique formé dans le bâti de réception 12.

Dans la suite de la description, on utilisera à titre non limitatif une orientation axiale selon l'axe principal A1, orientée de bas en haut en considérant les figures 1 et 2. On utilisera aussi une orientation radiale par rapport à l'axe principal A1.

Selon le mode de réalisation représenté, le bâti de réception 12 se présente sous la forme d'un corps cylindrique de section circulaire qui s'étend selon l'axe principal A1 et qui comporte plusieurs conduits 18. Les conduits 18 s'étendent ici radialement et débouchent vers l'intérieur dans le logement 16 et vers l'extérieur par des ouvertures de sortie 20.

Bien entendu, le bâti de réception 12 peut prendre des formes différentes. En particulier, le bâti de réception 12 peut faire partie d'une pièce plus complexe. L'important étant la forme du logement 16 et l'agencement des conduits 18 qui doivent être complémentaires de la vanne 14.

Le bâti de réception 12 comporte de préférence au moins deux conduits 18 et au plus quatre conduits 18, dans le cas d'une vanne 14 à un seul étage telle que représentée. Bien entendu, il est aussi possible de prévoir un nombre différent de conduits 18, qui peuvent être superposés dans le cas d'une vanne 14 à plusieurs étages.

Le logement 16 comporte ici une ouverture principale 22, ici dans la face supérieure du bâti de réception 12, par laquelle la vanne 14 est insérée dans le logement 16. L'ouverture principale 22 est ici munie d'un épaulement 24 situé au-dessus des conduits 16.

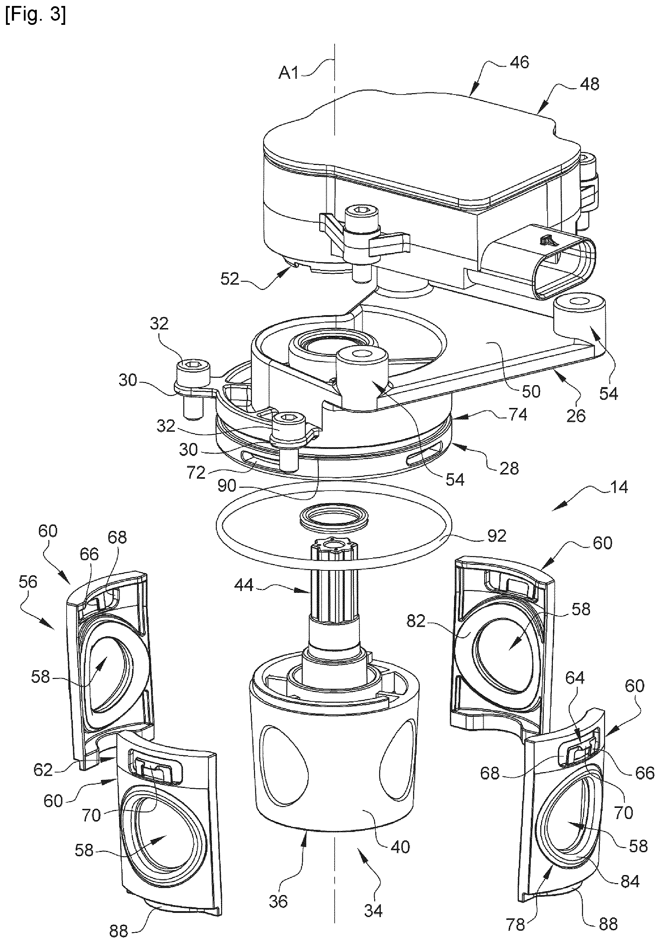

On décrit maintenant la vanne 14 en considérant également la figure 3.

La vanne 14 comporte un châssis 26 qui est prévu pour être fixé directement sur le bâti de réception 12. Selon l'exemple représenté, le châssis 26 comporte, ici dans sa partie inférieure, une portion de réception 28 de forme cylindrique tubulaire qui est reçue dans l'ouverture principale 22 et qui vient en appui axial contre l'épaulement 24.

Le châssis 26 comporte ici des pattes de fixation 30 positionnées pour permettre une fixation du châssis 26 sur le bâti de réception 12 au moyen de vis 32.

La vanne 14 comporte un boisseau 34 monté à rotation sur le châssis 26 autour de l'axe principal A1. Plus particulièrement, le boisseau 34 comporte un corps principal 36 muni de passages de fluide 38 débouchant dans une paroi axiale externe 40 du corps principal 36 par plusieurs orifices de sortie 42, ici quatre orifices de sortie 42 radialement opposés.

Le boisseau 34 comporte un arbre d'entraînement 44 qui s'étend depuis le corps principal 36 au travers d'une portion du châssis 26, de manière à pouvoir être accouplé à un actionneur 46 apte à commander la rotation du boisseau 36.

Selon le mode de réalisation représenté, l'actionneur 46 se présente ici sous la forme d'un moteur électrique agencé dans un boîtier 48, le boîtier 48 étant monté sur le châssis 26, ici sur sa face supérieure 50.

L'actionneur 46 comporte un organe d'entraînement 52 apte à entraîner l'arbre d'entraînement 44, par exemple une couronne intérieure qui coopère avec des dents externes formées sur un tronçon de l'arbre d'entraînement 44.

Le châssis 26 est ici muni de plots de fixation 54 prévus pour permettre la fixation du boîtier 48 par vissage dans le châssis 26.

Avantageusement, la vanne 14 comporte un ensemble de parois axiales périphériques 56 qui est solidaire du châssis 26, avant montage de la vanne 14 dans son logement 16.

L'ensemble de parois axiales périphériques 56 est muni de plusieurs ouvertures radiale 58 qui sont prévues pour être alignées radialement vers l'intérieur avec des orifices de sortie 42 du boisseau 34, dans des positions angulaires déterminées du boisseau 34, et vers l'extérieur avec les conduits 18 associés du bâti de réception 12.

Selon le premier mode de réalisation, l'ensemble de parois axiales périphériques 56 comporte plusieurs éléments de paroi axiale périphérique 60 rapportés, ici au nombre de quatre, qui sont fixés sur le châssis 26 de manière à pouvoir être portés par le châssis 26 avant montage de la vanne 14 dans son logement 16.

Chaque élément de paroi axiale périphérique 60 se présente ici sous la forme d'une plaquette amovible incurvée de manière à suivre globalement la courbure de la paroi axiale externe 40 du corps principal 36 du boisseau 34.

Chaque élément de paroi axiale périphérique 60 comprend une ouverture radiale 58 ici de diamètre sensiblement égal au diamètre du conduit 18 associé et au diamètre d'un orifice de sortie 42.

Chaque élément de paroi axiale périphérique 60 comporte, ici à proximité de son extrémité supérieure, une portion de fixation 62 apte à permettre son accrochage sur la portion de réception 28 du châssis 26, avant montage de la vanne 14 dans son logement 16.

Selon le mode de réalisation représenté, la portion de fixation 62 de chaque élément de paroi axiale périphérique 60 comporte un organe d'emboîtement élastique 64 apte à coopérer avec un élément complémentaire de la portion de réception 28 du châssis 26. Cet organe d'emboîtement élastique 64 prend ici la forme d'une languette flexible 66 agencée dans une fenêtre 68 formée dans la portion de fixation 62. La languette flexible 66 est munie à son extrémité libre d'un ergot 70 prévu pour venir s'accrocher dans une encoche 72 agencée dans la portion de réception 28.

La portion de réception 28 comporte ici un tronçon tubulaire 74 complémentaire de l'ouverture principale 22. Chaque encoche 72 se présente ici sous la forme d'une lumière oblongue ou perçage dans le tronçon tubulaire 74.

La portion de fixation 62 est reçue dans une rainure axiale annulaire 76 formée dans la portion de réception 28 et contigüe à la paroi axiale interne du tronçon tubulaire 74.

Avantageusement, chaque ouverture radiale 58 est pourvue d'un joint annulaire d'étanchéité 78 qui est porté par l'ensemble de parois axiales périphériques 56, avant montage de la vanne 14 dans son logement 16. Ce joint annulaire d'étanchéité 78 est configuré pour pouvoir s'interposer radialement entre le corps principal 36 du boisseau 34 et une surface d'appui 80 en vis-à-vis du bâti de réception 12, lorsque la vanne 14 est montée dans son logement 16. La surface d'appui 80 est ici une zone annulaire de la surface axiale interne du logement 16 qui borde l'entrée du conduit 18 correspondant.

Le joint annulaire d'étanchéité 78 comporte par exemple un bourrelet annulaire interne 82 qui est en appui radial contre le corps principal 36 du boisseau 34 et un bourrelet annulaire externe 84 qui est en appui radial contre la surface d'appui 80 du bâti de réception 12.

Avantageusement, chaque joint annulaire d'étanchéité 78 est réalisé d'une seule pièce avec l'élément de paroi axiale périphérique 60 associé, par moulage en deux matières distinctes, c'est-à-dire par injection de deux matières dans un moule. L'élément de paroi axiale périphérique 60 et le joint annulaire d'étanchéité 78 sont par exemple moulés par injection d'une matière plastique permettant d'obtenir un élément de paroi axiale périphérique 60 relativement rigide et d'une matière élastomère permettant d'obtenir un joint annulaire d'étanchéité 78 relativement souple et compressible, lors de l'insertion de la vanne 14 dans son logement 16.

Selon le mode de réalisation représenté, le corps principal 36 du boisseau 34 a une forme globalement tronconique de diamètre décroissant en direction de l'extrémité opposée au châssis 26, ici l'extrémité axiale inférieure.

On a schématisé l'angle a1 décrit par la paroi axiale externe 40 du corps principal 36 par rapport à une direction A2 parallèle à l'axe principal A1. Cet angle a1 est par exemple compris entre 2 et 6 degrés.

Avantageusement, l'ensemble de parois axiales périphériques 56 est configuré pour que son encombrement externe soit également de forme tronconique, en épousant la forme tronconique du corps principal 36 du boisseau 34. Comme illustré sur la figure 2, chaque élément de paroi axiale périphérique suit l'inclinaison de la paroi axiale externe 40 par rapport à la direction A2.

On note que l'on a désigné la paroi périphérique externe principale du corps principal 36 par « paroi axiale externe » bien que cette paroi soit légèrement tronconique et non pas exactement d'orientation axiale, dans le but de faciliter la description de la structure du boisseau 34.

La forme tronconique du corps principal 36 et le positionnement des éléments de paroi axiale périphérique 60 qui sont plaqués contre la paroi axiale externe 40 permettent de faciliter le montage de la vanne 14 dans le logement 16, en évitant notamment d'abîmer les éléments d'étanchéité lors du montage. En effet, le diamètre externe de l'ensemble de parois axiales périphériques 56, au niveau de son extrémité axiale inférieure, est ainsi inférieur au diamètre externe de l'ensemble de parois axiales périphériques 56, au niveau de son extrémité axiale supérieure. Aussi, comme le logement 16 est configuré pour être complémentaire de la vanne 14, il possède lui aussi une paroi axiale principale intérieure 86 de forme tronconique complémentaire de la forme tronconique de l'ensemble de parois axiales périphériques 56.

Ainsi, lorsque l'on insert axialement la vanne 14 dans le logement 16 par le haut, en considérant la figure 2, l'extrémité axiale inférieure de la vanne 14 pénètre facilement dans le logement 16 puisque cette extrémité à un diamètre externe largement inférieur au diamètre du logement 16 dans sa partie haute. La vanne 14 est insérée dans le logement 16 jusqu'à ce que le joint annulaire d'étanchéité 78 soit en appui étanche contre la surface d'appui 80 de la paroi axiale principale intérieure 86 du logement 16. La configuration tronconique du corps principal 36 et du logement 16 empêche toute détérioration du joint annulaire d'étanchéité 78 lors de son passage devant les orifices internes des conduits 18, ce qui permet de préserver l'intégrité du joint annulaire d'étanchéité 78 lors du montage.

Avantageusement, l'ensemble de parois axiales périphériques 56 comporte une portion tubulaire d'extrémité 88, du côté opposé au châssis 26, qui est configurée pour guider axialement la vanne 14 lors du montage dans son logement 16. Plus précisément, la portion tubulaire d'extrémité 88 vient se loger dans une portion d'extrémité inférieure complémentaire du logement 16 qui facilite le centrage de la vanne 14 dans le logement 16.

De préférence, le tronçon tubulaire 74 du châssis 26 est pourvu d'une gorge annulaire périphérique externe 90 et d'un joint torique 92 qui est monté dans ladite gorge annulaire périphérique externe 90 de manière à assurer un montage étanche du châssis 26 dans le logement 16.

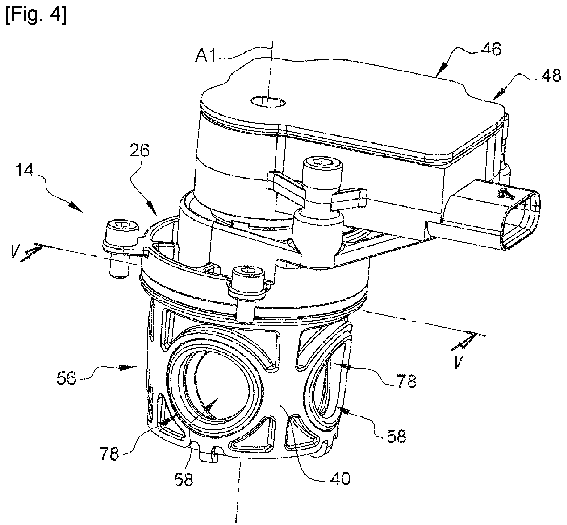

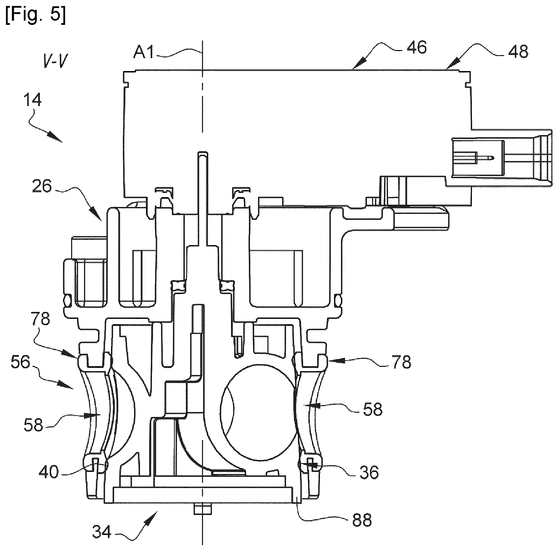

On décrit maintenant un second mode de réalisation de l'ensemble de vanne à cartouche 10 en référence aux figures 4 et 5. On s'attachera à décrire principalement les différences techniques entre le second mode de réalisation et le premier mode de réalisation. Les caractéristiques techniques identiques ne seront pas décrites une seconde fois.

Le second mode de réalisation se distingue du premier mode de réalisation par l'ensemble de parois axiales périphériques 56 qui est ici réalisé d'une seule pièce par moulage avec le châssis 26. Selon cet exemple de réalisation, les quatre éléments de paroi axiale périphérique 60 ne forment qu'une seule paroi globalement tubulaire qui s'étend axialement vers le bas depuis le châssis 26.

Selon le second mode de réalisation, il n'est donc plus nécessaire de prévoir une portion de fixation ni d'organes d'emboîtement élastique pour solidariser l'ensemble de parois axiales périphériques 56 avec le châssis 26.

Différentes variantes de réalisation de l'invention peuvent être prévues, que ce soit pour le premier ou le second mode de réalisation. En particulier, le joint annulaire d'étanchéité 78 peut être fabriqué séparément de l'ensemble de parois axiales périphériques 56 puis monté dans l'ouverture radiale 58, par exemple par emboîtement élastique. L'ensemble de parois axiales périphériques 56 et le joint annulaire d'étanchéité 78 peuvent aussi être réalisés d'une seule pièce en matériau élastomère, et surmoulés sur le châssis 26.

L'ensemble de parois axiales périphériques 56 peut comporter un nombre différent d'éléments de paroi axiale périphérique 60 adapté au nombre de conduits 18 aménagés dans le bâti de réception 12. De même, le nombre de passages de fluide 38 aménagés dans le boisseau 34 peut être différent de ce qui a été représenté sur les figures.

Selon une autre variante de réalisation, les éléments de paroi axiale périphérique 60 peuvent être fixés au châssis 26 par soudure ou par montage en force.

La vanne 14 décrite précédemment permet une grande modularité, en permettant par exemple de changer le boisseau 34 et les éléments de paroi axiale périphérique 60 en fonction du nombre de passages de fluide 38 et/ou du nombre de conduits 18 dans le bâti de réception 12 défini par le client de la vanne 14.

La vanne 14 est particulièrement adaptée à une vanne multivoie pour liquide (ou LMV pour Liquid Multiway Valve en anglais) à cartouche utilisée pour contrôler les flux d'un mélange d'eau glycolée. Elle permet d'utiliser un moteur de faible couple pour contrôler la position du boisseau 34.

Il est possible de prévoir une vanne 14 à plusieurs étages. Dans ce cas, l'ensemble de parois axiales périphériques 56 comporte plusieurs ouvertures radiales 58 superposées axialement.

La vanne 14 est particulièrement compacte. Elle permet d'assurer à la fois une étanchéité statique avec le bâti de réception 12 et une étanchéité dynamique avec la paroi axiale externe 40 du boisseau 34.

La vanne 14 peut être entièrement assemblée chez son fabriquant, avec l'ensemble de parois axiales périphériques 56 et les joints annulaires d'étanchéité 78, éventuellement avec l'actionneur 46, puis livrée complète au client qui possède un produit comportant le bâti de réception 12. Ceci permet notamment de contrôler et garantir l'étanchéité interne, de diminuer le nombre de pièces à référencer et facilite les opérations d'assemblage chez le client.

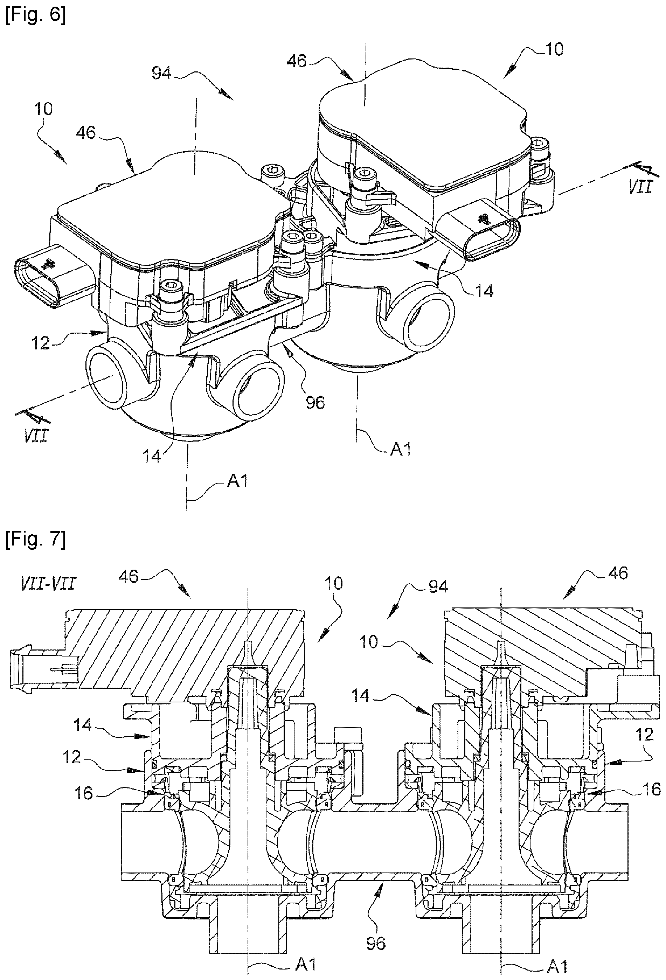

Sur les figures 6 et 7 on a représenté un troisième mode de réalisation comportant un collecteur de distribution de fluide 94 équipé de deux ensembles de vanne 10, chaque ensemble de vanne 10 étant réalisé conformément au premier mode de réalisation des figures 1 à 3.

Le collecteur de distribution de fluide 94 comporte un bâti de réception 12 apte à recevoir deux vannes 14 du type décrit précédemment. Le collecteur de distribution de fluide 94 est par exemple réalisé par moulage en matière plastique d'une seule pièce et comporte ici deux logements 16 configurés pour recevoir les vannes 14 associées.

Les deux logements 16 sont ici reliés entre eux par un conduit de liaison 96 qui constitue l'un des conduits 18 du bâti de réception 12.

Le reste de la structure des ensembles de vanne 10 et le fonctionnement des deux vannes 14 sont identiques à ce qui a été décrit pour le premier mode de réalisation des figures 1 à 3.

Les avantages techniques décrits pour le premier mode de réalisation de l'ensemble de vanne 10 s'appliquent bien entendu au collecteur de distribution de fluide 94 des figures 6 et 7.

Selon une variante de réalisation (non représentée), le collecteur de distribution de fluide 94 pourrait comporter plus de deux vannes 14, reliées par plusieurs conduits de liaison 96, ou bien comporter un ensemble de vanne 10 selon le deuxième mode de réalisation des figures 4 et 5.

### LEGENDE

10 : ensemble de vanne
12 : bâti de réception
14 : vanne
16 : logement
18 : conduit
20 : ouverture de sortie
22 : ouverture principale
24 : épaulement
26 : châssis
28 : portion de réception
30 : patte de fixation
32 : vis
34 : boisseau
36 : corps principal
38 : passage de fluide
40 : paroi axiale externe
42 : orifice de sortie
44 : arbre d'entraînement
46 : actionneur
48 : boîtier
50 : face supérieure
52 : organe d'entraînement
54 : plot de fixation
56 : ensemble de parois axiales périphériques
58 : ouverture radiale
60 : élément de paroi axiale périphérique
62 : portion de fixation
64 : organe d'emboîtement élastique
66 : languette flexible
68 : fenêtre
70 : ergot
72 : encoche
74 : tronçon tubulaire
76 : rainure axiale annulaire
78 : joint annulaire d'étanchéité
80 : surface d'appui
82 : bourrelet annulaire interne
84 : bourrelet annulaire externe
86 : paroi axiale principale intérieure
88 : portion tubulaire d'extrémité
90 : gorge annulaire périphérique externe
92 : joint torique
94 : collecteur de distribution de fluide
96 : conduit de liaison
a1 : angle du corps tronconique par rapport à la direction A2
A1 : axe principal
A2 : direction parallèle à l'axe principal

## Revendications

1. Vanne (14) à cartouche prévue pour être montée dans un logement (16) adapté aménagé dans un bâti de réception (12), comprenant :
- un châssis (26) prévu pour être fixé directement sur le bâti de réception (12),
- un boisseau (34) monté à rotation sur le châssis (26) autour d'un axe principal de rotation (A1), le boisseau (34) comportant :
-- un corps principal (36) muni de passages de fluide (38) débouchant dans une paroi axiale externe (40) du corps principal (36) par au moins deux orifices de sortie (42), et
-- un arbre d'entraînement (44) qui s'étend depuis le corps principal (36) au travers d'une portion du châssis (26), de manière à pouvoir être accouplé à un actionneur (46) apte à commander la rotation du boisseau (34),
- un ensemble de parois axiales périphériques (56) qui est solidaire du châssis (26), avant montage de la vanne (14) dans son logement (16), l'ensemble de parois axiales périphériques (56) étant muni de plusieurs ouvertures radiale (58) prévues pour être alignées vers l'intérieur avec des orifices de sortie (42) du boisseau (34), dans des positions angulaires déterminées du boisseau (34), et vers l'extérieur avec des conduits (18) associés du bâti de réception (12).

2. Vanne (10) selon la revendication précédente, **caractérisée en ce que** l'ensemble de parois axiales périphériques (56) comporte au moins deux éléments de paroi axiale périphérique (60) rapportés qui sont fixés sur le châssis (26) de manière à pouvoir être portés par le châssis (26) avant montage de la vanne (14) dans son logement (16), chaque élément de paroi axiale périphérique (60) étant muni d'une ouverture radiale (58), chaque élément de paroi axiale périphérique (60) comportant une portion de fixation (62) apte à permettre son accrochage sur une portion de réception (28) complémentaire du châssis (26), avant montage de la vanne (14) dans son logement (16).

3. Vanne (14) selon la revendication précédente, **caractérisée en ce que** la portion de fixation (62) de chaque élément de paroi axiale périphérique (60) comporte un organe d'emboîtement élastique (64) apte à coopérer avec un élément complémentaire de la portion de réception (28) associée du châssis (26).

4. Vanne (14) selon la revendication précédente, **caractérisée en ce que** la portion de réception (28) du châssis (26) comporte, pour chaque élément de paroi axiale périphérique (60), une rainure axiale (76) apte à recevoir la portion de fixation (62) et une encoche (72) apte à recevoir par emboîtement élastique l'organe d'emboîtement élastique (64) pour retenir la portion de fixation (62) sur la portion de réception (28).

5. Vanne (14) selon l'une quelconque des revendications précédentes, **caractérisée en ce que** chaque ouverture radiale (58) est pourvue d'un joint annulaire d'étanchéité (78) qui est porté par l'ensemble de parois axiales périphériques (56), avant montage de la vanne (14) dans son logement (16), de manière à s'interposer radialement entre le corps principal (36) du boisseau (34) et une surface d'appui (80) en vis-à-vis du bâti de réception (12), lorsque la vanne (14) est montée dans son logement (16).

6. Vanne (14) selon la revendication précédente, **caractérisée en ce que** le joint annulaire d'étanchéité (78) et l'ensemble de parois axiales périphériques (56) sont réalisés d'une seule pièce par moulage en deux matières distinctes.

7. Vanne (14) selon l'une quelconque des revendications précédentes, **caractérisée en ce que** le corps principal (36) du boisseau (34) a une forme tronconique de diamètre décroissant en direction de l'extrémité opposée au châssis (26), et **en ce que** l'ensemble de parois axiales périphériques (56) est configuré pour que son encombrement externe soit également de forme tronconique, en épousant la forme tronconique du corps principal (36) du boisseau (34).

8. Vanne (14) selon l'une quelconque des revendications précédentes, **caractérisée en ce que** l'ensemble de parois axiales périphériques (56) comporte une portion tubulaire d'extrémité (88), du côté opposé au châssis (26), qui est configurée pour guider axialement la vanne (14) lors du montage dans son logement (16).

9. Ensemble de vanne à cartouche (10) comportant :
- une vanne (14) selon l'une quelconque des revendications précédentes,
- un bâti de réception (12) muni d'un logement (16) adapté à la vanne (14), le bâti (12) comportant au moins deux conduits (18) qui débouchent dans le logement (16) par des orifices radiaux prévus pour être alignés radialement avec des orifices de sortie (42) du boisseau (34) dans au moins une position angulaire déterminée du boisseau (34).

10. Ensemble de vanne à cartouche (10) selon la revendication précédente, comportant une vanne (14) selon la revendication 7, **caractérisé en ce que** la paroi principale interne du logement (16) possède une forme tronconique globalement complémentaire de la forme tronconique du corps principal (36) du boisseau (34) équipé de l'ensemble de parois axiales périphériques (56).

11. Ensemble de vanne à cartouche (10) selon la revendication 9 ou 10, **caractérisé en ce que** le logement (16) comporte un épaulement (24) apte à recevoir en butée axiale un tronçon tubulaire (74) du châssis (26), et **en ce que** le tronçon tubulaire (74) du châssis (26) est pourvu d'une gorge annulaire périphérique externe (90) et d'un joint torique (92) monté dans ladite gorge annulaire périphérique externe (90).
